# EUROPÄISCHE PATENTSCHRIFT

(11) **EP 1 740 341 B1**
(45) Veröffentlichungstag und Bekanntmachung des Hinweises auf die Patenterteilung: **29.04.2009**
(21) Anmeldenummer: 05738078.4
(22) Anmeldetag: 31.03.2005
(51) Int. Cl.: B23K 26/34, F16J 15/44, F01D 11/12

(54) **VERFAHREN ZUR HERSTELLUNG EINER WABENDICHTUNG**
METHOD FOR PRODUCING A HONEYCOMB SEAL
PROCEDE POUR REALISER UNE GARNITURE D'ETANCHEITE EN NID D'ABEILLES

(30) Priorität: 20.04.2004 DE 102004018994
(43) Veröffentlichungstag der Anmeldung: 10.01.2007
(73) Patentinhaber: MTU Aero Engines GmbH, 80995 München (DE)
(72) Erfinder: MEIER, Reinhold, 84405 Dorfen (DE)
(86) Internationale Anmeldenummer: PCT/DE2005/000565
(87) Internationale Veröffentlichungsnummer: WO 2005/102592

(56) Entgegenhaltungen:
- CH-A- 478 363
- DE-A1- 10 238 551
- DE-A1- 19 631 038
- FR-A- 2 258 524
- US-A- 3 053 694
- US-A- 3 068 016
- US-A- 4 405 284
- US-B1- 6 485 025

## Beschreibung

Die Erfindung betrifft ein Verfahren zur Herstellung einer Wabendichtung, wobei die Wabendichtung eine mehrere Waben aufweisende Wabenstruktur aufweist, wobei die Wabenstruktur auf einer Seite, nämlich auf der Dichtungsseite, offen ausgebildet ist, und wobei die Wabenstruktur auf einer der Dichtungsseite gegenüberliegenden Seite von einem Trägerelement verschlossen und mit demselben fest verbunden ist.

Die DE 196 31 038 C2 offenbart ein Verfahren zum Herstellen einer Wabendichtung, wobei die Wabendichtung aus einem Trägerteil bzw. Trägerelement und einem Wabenelement bzw. einer Wabenstruktur besteht. Nach dem dort offenbarten Verfahren wird zuerst das Trägerteil auf einer Auflagevorrichtung positioniert und so in die gewünschte räumliche Form gebracht, wobei anschließend das Wabenelement auf das Trägerteil aufgesetzt wird. Nach einem Anpressen des Wabenelements gegen das Trägerteil erfolgt ein Heftpunktschweißen an der Kontaktfläche von Trägerteil und Wabenelement an einer festgelegten Anzahl von Heftpunkten unter Einblasen von Schutzgas an den Schweißpunkten. Das endgültige Befestigen des Wabenelements am Trägerteil erfolgt im Sinne der DE 196 31 038 C2 durch Löten.

Insbesondere dann, wenn ein Wabenelement bzw. eine Wabenstruktur aus einem FeCrAlY-Werkstoff mit einem Trägerteil bzw. Trägerelement aus einer Nickelbasislegierung oder Kobaltbasislegierung verbunden werden soll, ergeben sich Probleme insbesondere beim Verlöten von Wabenelement und Trägerteil. So muss insbesondere bei solchen Werkstoffpaarungen bei sehr hohen Temperaturen und bei einem Druck von weniger als 10⁻⁵ bar, bevorzugt unter Vakuum, gelötet werden. Derart extreme Arbeitsbedingungen beim Löten führen zu hohen Fertigungskosten und bergen des Weiteren hohe Fertigungsrisiken in sich.

Hiervon ausgehend liegt der vorliegenden Erfindung das Problem zu Grunde, ein neuartiges Verfahren zur Herstellung einer Wabendichtung zu schaffen.

Dieses Problem wird durch ein Verfahren zur Herstellung einer Wabendichtung im Sinne von Patentanspruch 1 gelöst. Erfindungsgemäß umfasst das Verfahren die folgenden Schritte: a) die Wabenstruktur wird in eine gewünschte räumliche Form gebracht und in dieser Form fixiert; b) anschließend wird die Wabenstruktur mit einem Füllmaterial ausgefüllt; c) darauffolgend wird die mit Füllmaterial ausgefüllte Wabenstruktur auf der Seite, auf welcher das Trägerelement angeordnet wird, derart bearbeitet, dass diese Seite eine gewünschte Kontur aufweist und Stirnkanten der Wabenstruktur mit der Füllmasse bündig abschließen; d) anschließend wird die so konturierte Seite mit einer Beschichtung beschichtet; e) darauffolgend wird auf die Beschichtung das Trägerelement vorzugsweise durch Laserpulverauftragschweißen aufgebracht.

Nach einer vorteilhaften Weiterbildung der Erfindung wird in Schritt b) die Wabenstruktur mit einem elektrisch leitenden Füllmaterial, insbesondere mit Leitwachs, ausgefüllt, wobei in Schritt d) die konturierte Seite mit einer Haftschicht für das Trägerelement beschichtet wird.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

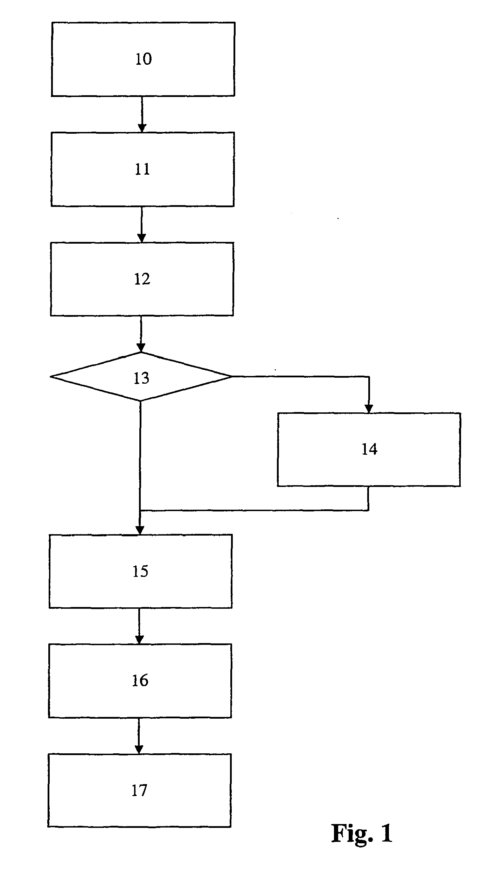

- Fig. 1: ein Ablaufdiagramm des erfindungsgemäßen Verfahrens zur Her- stellung einer Wabendichtung.

Unter Bezugnahme auf Fig. 1 wird das erfindungsgemäße Verfahren nachfolgend in größerem Detail beschrieben, wobei Fig. 1 ein schematisiertes Ablaufdiagramm des erfindungsgemäßen Verfahrens zur Herstellung einer Wabendichtung zeigt.

In einem ersten Schritt des erfindungsgemäßen Verfahrens gemäß Block 10 der Fig. 1 wird eine Wabenstruktur, die mehrere Waben aufweist, und zu beiden Seiten der Waben offen ausgebildet ist, in eine gewünschte räumliche Form bzw. in die geforderte Geometrie der herzustellenden Wabendichtung gebracht. Die Wabenstruktur wird in dieser gewünschten räumlichen Form bzw. in der geforderten Geometrie fixiert bzw. gehalten.

Es sei in diesem Zusammenhang darauf.hingewiesen, dass die Wabenstruktur bzw. die Waben derselben typischerweise aus einem MCrAlY-Werkstoff, insbesondere aus einem FeCrAlY-Werkstoff, gebildet bzw. hergestellt sind.

Nachdem die mehrere Waben aufweisenden Wabenstruktur in die gewünschte räumliche Form gebracht und in dieser Form fixiert worden ist, wird anschließend in einem zweiten Schritt des erfindungsgemäßen Verfahrens im Sinne des Blocks 11 die Wabenstruktur mit einem Füllmaterial ausgefüllt. Bei diesem Füllmaterial kann es sich um Wachs, insbesondere um elektrisch leitfähiges Leitwachs, oder auch um Polystyrol, insbesondere elektrisch leitfähiges Polystyrol, handeln. Die Wabenstruktur wird hierbei vollständig mit dem Füllmaterial ausgefüllt.

Im Anschluss hieran wird in einem nächsten Schritt des erfindungsgemäßen Verfahrens im Sinne des Blocks 12 die mit dem Füllmaterial ausgefüllte Wabenstruktur auf der Seite der Wabenstruktur, auf welcher später das Trägerelement der Wabendichtung angeordnet werden soll, derart bearbeitet, dass diese Seite eine gewünschte Profilierung bzw. eine gewünschte Kontur aufweist. Hierbei werden an dieser Seite die Waben derart frei geschnitten, dass Stirnkanten der Waben bzw. der Wabenstruktur mit der Füllmasse bündig abschließen und demnach zugänglich sind bzw. frei liegen.

Wurde in Block 11 des erfindungsgemäßen Verfahrens die Wabenstruktur mit einem elektrisch leitfähigen Füllstoff, insbesondere mit Leitwachs, aufgefüllt, so kann unmittelbar auf Block 15 des erfindungsgemäßen Verfahrens verzweigt werden und im Sinne eines nächsten Schritts des erfindungsgemäßen Verfahrens die in Block 12 konturierte Seite der mit Füllmaterial aufgefüllten Wabenstruktur mit einer Beschichtung beschichtet werden. Hierbei wird eine metallische Haftschicht für das Trägerelement der Wabendichtung auf die konturierte Seite der mit Füllmaterial ausgefüllten Wabenstruktur aufgebracht. Vorzugsweise wird diese konturierte Seite im Block 15 galvanisch, d. h. elektrolytisch, vernickelt. Die Überprüfung, ob die Wabenstruktur in Block 11 mit einem elektrisch leitfähigen Füllstoff aufgefüllt wurde, ist in Fig. 1 durch den Block 13 visualisiert.

An dieser Stelle sei darauf hingewiesen, dass dann, wenn einerseits in Block 15 die metallische Haftschicht durch galvanisches Vernickeln der konturierten Seite auf dieselbe aufgebracht werden soll, und wenn andererseits in Block 11 die Waben mit einem elektrisch nicht-leitfähigen Füllstoff ausgefüllt wurden, die Oberfläche der in Block 12 konturierten Seite der mit Füllmaterial aufgefüllten Wabenstruktur im Sinne des Blocks 14 vor dem galvanischen Vernickeln in Block 15 z. B. durch Beschichten elektrisch leitfähig gemacht wird.

Weiterhin soll darauf hingewiesen werden, dass das Beschichten, insbesondere das Vernickeln, der konturierten Seite der mit Füllmaterial ausgefüllten Wabenstruktur im Sinne des Blocks 15 auch auf chemischem Wege und damit stromlos durchgeführt werden kann. In diesem Fall wird selbst dann, wenn in Block 11 des erfindungsgemäßen Verfahrens die Wabenstruktur mit einem elektrisch nicht-leitfähigen Füllmaterial ausgefüllt wurde, von Block 12 unmittelbar auf Block 15 verzweigt.

Im Anschluss auf das Aufbringen der metallischen Haftschicht auf die konturierte Seite der mit Füllmaterial aufgefüllten Wabenstruktur im Sinne des Blocks 15 wird in einem nächsten Schritt des Verfahrens das Trägerelement der Wabendichtung auf die metallische Haftschicht durch Laserpulverauftragsschweißen aufgebracht. Dies ist durch den Block 16 visualisiert. Im Sinne der hier vorliegenden Erfindung wird demnach das Trägerelement der Wabendichtung erst beim Laserpulverauftragsschweißen hergestellt bzw. gefertigt und nicht wie nach dem Stand der Technik als fertige Baugruppe mit der Wabenstruktur verlötet.

Im Sinne der hier vorliegenden Erfindung wird vorzugsweise das Trägerelement der Wabendichtung durch Laserpulverauftragsschweißen eines Nickelbasislegierungswerkstoffs oder Kobaltbasislegierungswerkstoffs oder eines Eisenbasislegierungswerkstoffs auf die metallische Haftschicht hergestellt.

Nach dem Herstellen des Trägerelements der Wabendichtung durch Laserpulverauftragsschweißen wird im Sinne des Blocks 17 vorzugsweise noch eine Endbearbeitung der so hergestellten Wabendichtung durchgeführt. Im Zuge dieser Endbearbeitung kann in Block 17 das Füllmaterial über die offene Dichtungsseite der Wabenstruktur aus derselben entfernt werden. Weiterhin können Außenkonturen der Wabendichtung noch auf Endkontur bearbeitet werden. Weiterhin können Anschlusselemente in die Wabendichtung eingeschoben bzw. an derselben befestigt werden, um die Wabendichtung letztendlich einfach und sicher im Bereich einer Dichtstelle zu montieren.

Mit dem erfindungsgemäßen Verfahren können im Querschnitt kreissegmentförmige bzw. ringsegmentförmige Wabendichtungssegmente dadurch hergestellt werden, dass im Schritt gemäß Block 11 des erfindungsgemäßen Verfahrens eine Wabenstruktur in eine geschlossene Ringstruktur gebracht und alle nachfolgenden Verfahrensschritte im Sinne der Blöcke 11 bis 17 an dieser Ringstruktur durchgeführt werden. Im Anschluss an das Herstellen einer solchen ringförmigen Wabendichtung lassen sich dann durch Trennen der ringförmigen Wabendichtung ringsegmentförmige Wabendichtungssegmente bereitstellen.

Mit Hilfe des hier vorliegenden erfindungsgemäßen Verfahrens wird eine kostengünstige, einfache und sichere Herstellung von Wabendichtungen vorgeschlagen.

## Patentansprüche

1. Verfahren zur Herstellung einer Wabendichtung, wobei die Wabendichtung eine mehrere Waben aufweisende Wabenstruktur aufweist, wobei die Wabenstruktur auf einer Seite, nämlich auf der Dichtungsseite, offen ausgebildet ist, und wobei die Wabenstruktur auf einer der Dichtungsseite gegenüberliegenden Seite von einem Trägerelement verschlossen und mit demselben fest verbunden ist, mit folgenden Schritten:
a) die Wabenstruktur wird in eine gewünschte räumliche Form gebracht und in dieser Form fixiert,
b) anschließend wird die Wabenstruktur mit einem Füllmaterial ausgefüllt,
c) darauffolgend wird die mit Füllmaterial ausgefüllte Wabenstruktur auf der Seite, auf welcher das Trägerelement angeordnet wird, derart bearbeitet, dass diese Seite eine gewünschte Kontur aufweist und Stirnkanten der Wabenstruktur mit der Füllmasse bündig abschließen,
d) anschließend wird die so konturierte Seite mit einer Beschichtung beschichtet,
e) darauffolgend wird auf die Beschichtung das Trägerelement aufgebracht.

2. Verfahren nach Anspruch 1,
**dadurch gekennzeichnet,**
**dass** in Zusammenhang mit Schritt b) die Wabenstruktur mit einem elektrisch leitenden Füllmaterial, insbesondere mit Leitwachs, ausgefüllt wird.

3. Verfahren nach Anspruch 1,
**dadurch gekennzeichnet,**
**dass** in Zusammenhang mit Schritt b) die Wabenstruktur mit einem elektrisch nicht-leitenden Füllmaterial ausgefüllt wird, welches im Anschluss an Schritt c) und vor Schritt d) elektrisch leitend gemacht wird.

4. Verfahren nach einem der Ansprüche 1 bis 3,
**dadurch gekennzeichnet,**
**dass** in Zusammenhang mit Schritt d) die konturierte Seite mit einer Haftschicht für das Trägerelement beschichtet wird.

5. Verfahren nach einem der Ansprüche 1 bis 4,
**dadurch gekennzeichnet,**
**dass** in Zusammenhang mit Schritt d) die konturierte Seite vernickelt wird.

6. Verfahren nach einem der Ansprüche 1 bis 5,
**dadurch gekennzeichnet,**
**dass** in Zusammenhang mit Schritt e) das Trägerelement auf die Beschichtung durch Laserpulverauftragschweißen aufgebracht wird.

7. Verfahren nach einem der Ansprüche 1 bis 6,
**dadurch gekennzeichnet,**
**dass** im Anschluss an Schritt d) oder im Anschluss an Schritt e) das Füllmaterial über die offen Dichtungsseite aus der Wabenstruktur entfernt wird.

8. Verfahren nach einem der Ansprüche 1 bis 7,
**dadurch gekennzeichnet,**
**dass** die Wabenstruktur aus einem MCrAlY-Werkstoff, insbesondere aus einem FeCrAlY-Werkstoff, gebildet ist.

9. Verfahren nach einem der Ansprüche 1 bis 8,
**dadurch gekennzeichnet,**
**dass** das Trägerelement aus einer Nickelbasislegierung oder einer Kobaltbasislegierung oder einer Eisenbasislegierung gebildet ist.

## Claims

1. A process for manufacturing a honeycomb seal, wherein the honeycomb seal has a honeycomb structure having a plurality of honeycombs, wherein the honeycomb structure is formed so that it is open on one side, namely on the sealing side, and wherein the honeycomb structure is closed by a carrier element on a side lying opposite the sealing side and is fixedly connected to the same, having the following steps:
a) the honeycomb structure is brought into a desired three-dimensional form and is fixed in this form;
b) then the honeycomb structure is filled with a filling material;
c) subsequently the honeycomb structure filled with filling material is machined on the side on which the carrier element is arranged in such a way that this side has a desired contour and end edges of the honeycomb structure end so that they are flush with the filling compound;
d) then the side which has been contoured in this way is coated with a coating; and
e) subsequently the carrier element is applied to the coating.

2. A process according to claim 1, **characterised in that** in conjunction with step b) the honeycomb structure is filled with an electrically conductive filling material, in particular with conductive wax.

3. A process according to claim 1, **characterised in that** in conjunction with step b) the honeycomb structure is filled with an electrically non-conductive filling material which is made electrically conductive after step c) and before step d).

4. A process according to one of claims 1 to 3,
**characterised in that** in conjunction with step d) the contoured side is coated with an adhesive layer for the carrier element.

5. A process according to one of claims 1 to 4,
**characterised in that** in conjunction with step d) the contoured side is nickel-plated.

6. A process according to one of claims 1 to 5,
**characterised in that** in conjunction with step e) the carrier element is applied to the coating by laser powder build-up welding.

7. A process according to one of claims 1 to 6,
**characterised in that** following step d) or following step e) the filling material is removed from the honeycomb structure by way of the open sealing side.

8. A process according to one of claims 1 to 7,
**characterised in that** the honeycomb structure is formed from an MCrAlY material, in particular from an FeCrAlY material.

9. A process according to one of claims 1 to 8,
**characterised in that** the carrier element is formed from a nickel-based alloy or a cobalt-based alloy or an iron-based alloy.

## Revendications

1. Procédé de fabrication d'une garniture d'étanchéité en nid d'abeille, la garniture d'étanchéité en nid d'abeille comprenant une structure en nid d'abeille présentant plusieurs alvéoles, la structure en nid d'abeille étant ouverte sur une face, à savoir la face d'étanchéité, et la structure en nid d'abeille étant fermée sur une face opposée à la face d'étanchéité par un élément de support et étant reliée fixement à celui-ci, comprenant les étapes suivantes :
a) la structure en nid d'abeille est amenée dans un moule tridimensionnel souhaité et fixé dans ce moule,
b) puis la structure en nid d'abeille est remplie d'un matériau de remplissage,
c) la structure en nid d'abeille remplie du matériau de remplissage est ensuite usinée sur la face sur laquelle l'élément de support est disposé, de telle sorte que cette face comprend un contour souhaité et que les arêtes frontales de la structure en nid d'abeille terminent en affleurement avec la masse de remplissage,
d) puis la face ainsi profilée est recouverte d'un revêtement,
e) l'élément de support est ensuite appliqué sur le revêtement.

2. Procédé selon la revendication 1,
**caractérisé en ce que**
en combinaison avec l'étape b), la structure en nid d'abeille est remplie d'un matériau de remplissage électriquement conducteur, en particulier de cire conductrice.

3. Procédé selon la revendication 1,
**caractérisé en ce que**
en combinaison avec l'étape b), la structure en nid d'abeille est remplie d'un matériau de remplissage électriquement non conducteur, lequel est rendu électriquement conducteur à la suite de l'étape c) et avant l'étape d).

4. Procédé selon l'une quelconque des revendications 1 à 3,
**caractérisé en ce que**
en combinaison avec l'étape d), la face profilée est recouverte d'une couche adhésive pour l'élément de support.

5. Procédé selon l'une quelconque des revendications 1 à 4,
**caractérisé en ce que**
en combinaison avec l'étape d), la face profilée est nickelée.

6. Procédé selon l'une quelconque des revendications 1 à 5,
**caractérisé en ce que**
en combinaison avec l'étape e), l'élément de support est appliqué sur le revêtement par rechargement par soudure au laser avec apport de poudre.

7. Procédé selon l'une quelconque des revendications 1 à 6,
**caractérisé en ce que**
à la suite de l'étape d) ou à la suite de l'étape e), le matériau de remplissage au-dessus de la face d'étanchéité ouverte est éliminé de la structure en nid d'abeille.

8. Procédé selon l'une quelconque des revendications 1 à 7,
**caractérisé en ce que**
la structure en nid d'abeille est formée d'un matériau MCrAly, en particulier d'un matériau FeCrAlY.

9. Procédé selon l'une quelconque des revendications 1 à 8,
**caractérisé en ce que**
l'élément de support est formé d'un alliage à base de nickel ou d'un alliage à base de cobalt ou d'un alliage à base de fer.
